# EUROPÄISCHE PATENTSCHRIFT

(11) **EP 0 673 567 B1**
(45) Veröffentlichungstag und Bekanntmachung des Hinweises auf die Patenterteilung: **04.09.1996**
(21) Anmeldenummer: 93924508.0
(22) Anmeldetag: 10.11.1993
(51) Int. Cl.: H04B 3/54

(54) **VERFAHREN ZUM ÜBERTRAGEN VON INFORMATIONEN ÜBER EINE STARKSTROMLEITUNG**
PROCESS FOR TRANSMITTING DATA VIA A HEAVY CURRENT LINE
PROCEDE PERMETTANT DE TRANSMETTRE DES INFORMATIONS PAR L'INTERMEDIAIRE D'UNE LIGNE A COURANT FORT

(30) Priorität: 10.12.1992 DE 4241512
(43) Veröffentlichungstag der Anmeldung: 27.09.1995
(73) Patentinhaber: Zumtobel Aktiengesellschaft, A-6850 Dornbirn (AT)
(72) Erfinder: HERTER, Eberhard, D-70148 Stuttgart (DE)
(74) Vertreter: Fleck, Hermann-Josef, Dr.-Ing.
(86) Internationale Anmeldenummer: DE9301071
(87) Internationale Veröffentlichungsnummer: WO9414249

(56) Entgegenhaltungen:
- DE-A- 2 059 363
- GB-A- 2 120 046
- PATENT ABSTRACTS OF JAPAN vol. 10, no. 255 (E-433)(2311) 2. September 1986 & JP,A,61 081 037 (MITSUBISHI ELECTRIC CORP.) 24. April 1986

## Beschreibung

Die Erfindung betrifft ein Verfahren zum Übertragen von Informationen über eine Starkstromleitung, wobei die Informationen als Nutzsignal in einem Nutzband eines Nutzfrequenzbereiches übertragen werden und die Mittenfrequenz des Nutzbandes um mindestens eine Größenordnung höher ist als die Frequenz der auf der Starkstromleitung anstehenden, niederfrequenten Wechselspannung.

Ein derartiges Verfahren ist in der GB-A 2,120,046 beschrieben. Hierbei ist angegeben, als Referenzsignal zur Bildung der Trägerfrequenz als Referenzsignal die Netzfrequenz heranzuziehen.

In der DE-A 20 59 363 wird gelehrt, bei einem Verfahren zur Synchronisation eines Zeitmultiplexsystems senderseitig einen Pegelsprung der Trägerschwingung zu erzeugen, der empfangsseitig erfaßt wird, um eine Rahmensynchronisation zu erreichen.

Ein Starkstromnetz, z.B. ein 220V-Netz, stellt eine Quelle mit sehr kleinem Innenwiderstand dar und ist daher für einen großen Frequenzbereich über der Netzfrequenz sehr niederohmig. Man kann nun einen Netzausläufer durch ein Sperrfilter von der niederohmigen Quelle des Starkstromnetzes abgrenzen, um so auf diesem abgegrenzten Starkstrom-Teilnetz eine zusätzliche Informationsübertragung durchführen zu können. Auf diese Weise lassen sich z.B. Fernwirksysteme und kleine lokale Netze realisieren. Das Sperrfilter darf natürlich die Starkstrom-Energieübertragung nicht nennenswert beeinträchtigen, muß aber für die zur Informationsübertragung genützten Frequenzen eine hinreichend hohe Impedanz aufweisen.

Bei der Informationsübertragung über ein Starkstrom-Teilnetz müssen einige besondere Randbedingungen berücksichtigt werden. Bei dem Leitungssystem sind dies:
a) Die Starkstromleitung ist für höhere Frequenzen sehr erdunsymmetrisch, u.a. durch die Anordnung des Schutzleiters. Der Einhaltung der Funkstörgrenzwerte kommt besondere Bedeutung zu. Der zulässige Sendepegel des Nutzsignals ist daher begrenzt. Durch die mögliche Einkopplung der Signale starker Funksender ist mit erhöhten Störsignalen zu rechnen. Besonders störend ist, wenn ein solcher Störer in der Nähe einer zur Informationsübertragung benutzten Trägerfrequenz liegt.
b) Die Informationsübertragung kann in vielen Fällen keine Bedingungen für die Installation stellen. Deshalb wird die Starkstromleitung in der Regel ohne Wellenwiderstandsabschluß betrieben werden müssen. An angeschalteten Verbrauchern, Steckdosen und dgl. treten weitere Reflexionsstellen auf, die den verfügbaren Störabstand vermindern.

Für die Informationsübertragung auf Starkstromleitungen sind in den relevanten Normen und Empfehlungen bestimmte Frequenzbereiche zur exklusiven Nutzung vorgesehen. Dies bedeutet jedoch nicht, daß bei einer konkreten Systemplanung dieser Frequenzbereich tatsächlich genutzt werden kann. Es gibt Starkstromnetze, an die Verbraucher mit parallelgeschalteten Kondensatoren angeschlossen sind. Diese Kondensatoren schließen höhere Frequenzen kurz und verhindern daher eine Informationsübertragung in den entsprechenden Frequenzbereichen.

Es sind zudem Starkstromnetze bekannt, bei denen andere Anwendungen Priorität genießen, d.h. hier darf die diskutierte Informationsübertragung wohl durchgeführt werden, jedoch nur mit Signalen, welche die priorisierten Anwendungen nicht stören. Die naheliegende Lösung sind Bandspreizverfahren (spread spectrum) in breiten Frequenzbändern. Dieser Austausch von Störabstand und Bandbreite bedingt jedoch einen ziemlichen Aufwand in den Empfängern und der praktisch erreichbare Störabstandsgewinn bleibt wegen der Degradationen durch die nichtlinearen Eigenschaften des hier vorliegenden Übertragungskanals wesentlich kleiner als z.B. bei vergleichbaren Nachrichten-Satellitensystemen mit SSMA (spread spectrum multiple access). Zu den nichtlinearen Übertragungseigenschaften gehören bei den hier betrachteten Starkstromleitungen neben den Dämpfungs- und Phasenverzerrungen, Reflexionen und dgl. vor allem die verschiedenen, wechselnden und schwer charakterisierbaren Störer. So verursachen z.B. manche Vorschaltgeräte von Leuchtstoffröhren starke Störungen in einem Frequenzbereich, der sein Zentrum z.B. bei 30 kHz hat.

Die vorstehenden Ausführungen lassen die generelle Problematik der Informationsübertragung auf Starkstromleitungen erkennen.

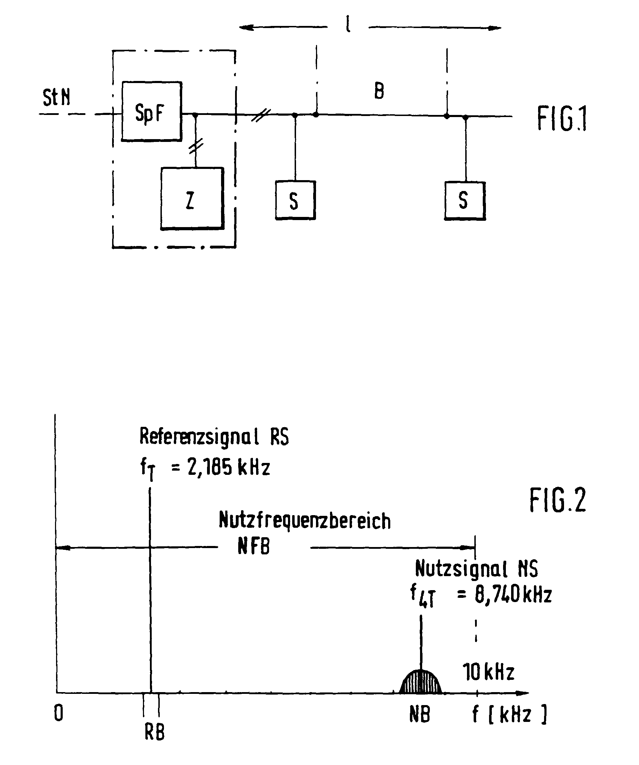

Anhand der Fig. 1 sollen die wesentlichen Anforderungen an die Informationsübertragung auf Starkstromleitungen erläutert werden.
1) Von einer Zentrale Z sollen Informationen, z.B. Fernwirksignale an die an einen Bus B angeschalteten Stationen übertragen werden.
2) Das System soll im Frequenzbereich unterhalb von 10 kHz arbeiten. Mit Rücksicht auf die Schrittgeschwindigkeit, die gewählte Codierung usw. soll für die Übertragung eine Bandbreite von 1 kHz zur Verfügung stehen.
3) Im Frequenzbereich zwischen 3 kHz und 10 kHz haben andere Übertragungssysteme Priorität, so daß das System nur mit kleiner Sendespannung (maximal 20 mV) arbeiten darf. Unterhalb von 3 kHz gibt es keine konkurrierenden Systeme, der Signalpegel darf in diesem Frequenzbereich daher größer sein, er hat aber aus anderen Gründen eine Obergrenze (z.B. Sendespannung maximal 0,5 V).
4) Es gibt Stationen S, welche nach einer Neuanschaltung an den Bus B relativ schnell normalen Betrieb ausführen sollen, z.B. einen an sie gerichteten Aufruf der Zentrale Z erkennen und in Gegenrichtung in einer dafür vorgesehenen Zeitlage eine Meldung an die Zentrale Z abgeben. Es muß dabei sichergestellt sein, daß nur eine tatsächlich aufgerufene Station S sendet und daß sie die vorgesehene Zeitlage einhält, damit Kollisionen mit anderen Stationen S vermieden werden. Dabei spielt es keine Rolle, ob für die Übertragungsrichtung von der Station S zur Zentrale Z das gleiche Frequenzband benutzt wird wie von der Zentrale Z zur Station S (Richtungstrennung durch Zeitgetrenntlage Ping Pong) oder ob in der Richtung von der Station S zur Zentrale Z die Übertragung in einen anderen Frequenzbereich erfolgt (Frequenzgetrenntlage).

Die Informationsübertragung soll, wie eingangs definiert, im Bereich unterhalb von 10 kHz erfolgen. Für die richtige Erkennung/Adressierung/Zuordnung der in beiden Richtungen übertragenen Informationen ist ein allen Stationen S gemeinsamer Zeitbezug erforderlich. Die Zentrale Z sendet zu diesem Zweck in regelmäßigen Abständen ein Synchronisationssignal (z.B. eine spezielle Bitkombination), wodurch ein Zeitrahmen definiert wird. Eine neu an- bzw. eingeschaltete Station S muß folgende Operationen durchführen, bevor sie gegebenenfalls selbst senden darf:
1) Aus dem von der Zentrale Z ankommenden Signal muß der Schritt- bzw. Bit-Takt abgeleitet werden.
2) Erst wenn die zur Taktgewinnung benutzte Schaltung (z.B. Phase-locked-loop, PLL) hinreichend eingeschwungen ist, steht der Takt für die Abfrage der einzelnen Schritte des ankommenden Signals zur Verfügung.
3) Die Station S versucht danach, das Synchronisationssignal zu erkennen. Eine übliche Realisierung benutzt einen Korrelationsempfänger, der eine bestimmte Bitkombination im einlaufenden Bitstrom entdeckt. Ist es bei dem verwendeten Leitungscode möglich, daß das Synchronisationssignal durch Informationsbits imitiert werden kann, dann muß durch eine Zeitfensterschaltung die Imitationswahrscheinlichkeit auf einen hinreichend kleinen Wert reduziert werden. Nach dem ersten Erkennen des Synchronisationssignals wird jeweils im Rahmenabstand wieder und wieder nach der betreffenden Bitkombination gesucht.
4) Erst wenn die Synchronisation zweifelsfrei steht, kann die Station S die im Rahmen enthaltenen Adressen, Befehle (z.B. Sendeaufruf) usw. lesen und verstehen.

Mit welchen Störungen muß bei der Informationsübertragung in dem Frequenzbereich unterhalb 10 kHz gerechnet werden? Bei den benutzten niederen Frequenzen (d.h. großen Wellenlängen λ) und Buslängen l von z.B. 150 bis 200 m ist der Bus B in aller Regel ein elektrisch kurzes Gebilde (l <<λ ). Damit spielen Reflexionen für den vorliegenden Anwendungsfall eine untergeordnete Rolle. Das Sperrfilter SpF darf bei 50 Hz keinen nennenswerten Widerstand aufweisen, muß dabei Dauer-Lastströme von z.B. 16A aushalten können und seine für die Informationsübertragung relevanten Werte sollen sich bei Veränderungen des Laststromes möglichst nicht ändern. Um den Aufwand in Grenzen zu halten, muß man sich bei den Anforderungen bezüglich der Sperrdämpfung bescheiden. Das bedeutet aber, daß Schaltvorgänge und Oberwellen vom Starkstromnetz StN her, wohl etwas gedämpft, auch auf dem Bus B auftreten. Besonders kritisch sind, eben wegen des Sperrfilters SpF, die Impuls- und Dauerstörungen, welche durch die am Bus B angeschalteten Starkstrom-Verbraucher verursacht werden. Bei Lastsprüngen reagiert das Sperrfilter SpF mit einer Impulsantwort, welche alle möglichen störenden Frequenzen enthalten kann. Durch Nichtlinearitäten der Starkstrom-Verbraucher können störende Spektrallinien als Dauerstörer auf dem Bus B auftreten. Je nach Realisierung des Sperrfilters SpF können schließlich auch indirekte Störeinflüsse dadurch auftreten, daß Teile des Sperrfilters SpF in Abhängigkeit vom 50 Hz-Laststrom oder bei Änderungen desselben ihre Eigenschaften verändern (z.B. Ansteuerabhängigkeit von Induktivitäten).

Der insgesamt verfügbare Frequenzbereich unterhalb 10 kHz ist nicht so breit, daß sich ein Spread-Spectrum-System mit großem Spreizgewinn realisieren ließe. Unter den gegebenen Randbedingungen würde man sich mit einem Spreizverfahren mehr Nachteile (u.a. schwierige Synchronisation) einhandeln als der erreichbare Spreizgewinn wert ist.

Bei der Verlagerung des Nutzbandes für die Informationsübertragung in den Frequenzbereich unterhalb von 10 kHz ist folgendes zu beachten. Unterhalb von 3 kHz ist wohl ein relativ hoher Sendepegel zulässig, wegen des geringen Frequenzabstandes zum Starkstromsystem fallen in das mit 1 kHz Bandbreite angenommenen Nutzband aber so intensive Impuls- und Dauerstörer, daß die Realisierung eines kostengünstigen Informationsübertragungssystems zumindest als sehr schwierig, eines solchen mit schneller und sicherer Synchronisation neu zugeschalteter Empfänger aber fast ummöglich erscheint. Im Frequenzbereich zwischen 3 kHz und 10 kHz ist der zulässige Sendepegel so niedrig, daß eine Informationsübertragung in diesem Frequenzbereich ebenfalls große Probleme aufwirft.

Es ist Aufgabe der Erfindung, ein Verfahren zum Übertragen von Informationen über eine Starkstromleitung der eingangs erwähnten Art zu schaffen, das eine sichere Informationsübertragung unter den auf Starkstromleitungen gegebenen Randbedingungen zuläßt.

Diese Aufgabe wird nach der Erfindung durch ein Verfahren gelöst, das dadurch gekennzeichnet ist, daß außerhalb des Nutzbandes im Nutzfrequenzbereich oberhalb der Netzfrequenz in einem schmalen Referenzband ein separates Referenzsignal übertragen wird und daß aus dem Referenzsignal ein Signal zur Auswertung und Verarbeitung des Nutzsignals im Nutzband abgeleitet wird.

Mit Hilfe des Referenzsignals kann die Übertragung von Informationen auf Starkstromleitungen sicherer gemacht werden, da empfangsseitig sowohl das Referenzsignal als auch das Nutzsignal zur Auswertung und Verarbeitung herangezogen werden. Die Übertragung des Referenzsignals kann sehr schmalbandig sein, so daß man eine Frequenzlage wählen kann, die nicht von wesentlichen Oberwellen der Netzfrequenz oder speziellen, örtlichen gegebenen Sinusstörern getroffen wird. Die Wahl fällt dabei auf Frequenzbereiche, die man für das Nutzband nicht in Betracht zieht.

Aus einem extrem schmalbandig empfangenen Referenzsignal läßt sich ein kohärentes Vergleichssignal zur Demodulation und/oder Decodierung im Nutzband gewinnen.

Nach einer Ausgestaltung ist vorgesehen, daß das Referenzsignal als reine Sinusträgerfrequenz übertragen wird. Dabei ist es weder notwendig noch sinnvoll, im Referenzband mit einer gegen Null gehenden Bandbreite zu arbeiten. In der Praxis wird das Referenzband eine gewisse Bandbreite von z.B. 40 Hz haben.

In weiterer Ausgestaltung ist vorgesehen, daß das Referenzsignal in regelmäßigen Zeitabständen verändert, z.B. unterbrochen oder umgetastet wird, um einen Zeitrahmen für die Synchronisation zu erhalten.

Je schmalbandiger das Referenzband ist, um so mehr Zeit wird der beim Aus- oder Umtasten entstehende Einschwingvorgang in Anspruch nehmen, so daß es eventuell unmöglich wird, über das Referenzsignal einen Zeitrahmen aufs Bit genau zu definieren.

Nach einer bevorzugten Ausgestaltung ist vorgesehen, daß der Nutzfrequenzbereich unterhalb von 10 kHz gewählt wird und daß das Nutzband in den oberen Frequenzbereich des Nutzfrequenzbereiches und das Referenzband in den unteren Frequenzbereich des Nutzfrequenzbereiches gelegt wird, wobei das Referenzsignal mit höherem Pegel als das Nutzsignal übertragen wird.

Ein Ausführungsbeispiel des erfindungsgemäßen Verfahrens sieht vor, daß das Nutzsignal mit einer Trägerfrequenz übertragen wird, die ein ganzzahliges Vielfaches der Sinusträgerfrequenz des Referenzsignals ist und daß die Informationen im Nutzband durch Phasenumtastung mit Synchrondemodulation gebildet werden, wobei empfangsseitig Gleichphase und Gegenphase mit einer aus dem Referenzsignal abgeleiteten, mit der Trägerfrequenz des Nutzsignals frequenzgleichen Vergleichssignals die beiden binären Informationswerte "0" und "1" bilden.

Dabei kann zur Synchronisation vorgesehen sein, daß die Unterbrechung des Referenzsignals mittels eines Hüllkurvendetektors erfaßt wird und daß nach einer vorgegebenen Zeitspanne im Nutzsignal in gleichmäßigen, dem Zeitrahmen entsprechenden Abständen ein Synchronisationscode übertragen wird, wobei die Sicherheit der Erkennung dadurch verbessert wird, daß bei einer Erkennung der Unterbrechung des Referenzsignals mit einer Toleranz von n Bitbreiten ein Synchronisationscode verwendet wird, der aus einem "1"-Bit besteht, dem n x "0"-Bits vorausgeschickt und nachgesendet werden, und daß ein Zeitfenster mit (n+1) Bits zur Auswertung des "1"-Bits und damit des Synchronisationscodes verwendet wird.

Die Informationsübertragung selbst wird dadurch noch sicherer, daß der Bit-Wert "0" und der Bit-Wert "1" im Synchronisationscode und in der übertragenen Information mit einer vorgegebenen Anzahl von Halbwellen der Trägerfrequenz des Nutzsignals übertragen werden, daß empfangsseitig die Anzahl der mit der aus der Sinusträgerfrequenz des Referenzsignals abgeleiteten Vergleichssignals gleichphasigen bzw. gegenphasigen Halbwellen des Nutzsignals abgezählt werden und daß bei der Auswertung des Nutzsignals für die Bit-Werte "0" bzw. "1" mehr als die Hälfte der vorgegebenen Halbwellen gleichphasig bzw. gegenphasig festgestellt werden müssen.

Die Erfindung wird anhand eines in den Zeichnungen dargestellten Ausführungsbeispiels näher erläutert. Es zeigt:
- Fig. 1: schematisch die Übertragung von Informationen auf einer Starkstromleitung,
- Fig. 2: die Verteilung des Nutz- und Referenzbandes im Nutzfrequenzbereich,
- Fig. 3: das Zeitdiagramm eines Ausführungsbeispiels des Verfahrens und
- Fig. 4: im Blockschaltbild die für das Verfahren nach Fig. 3 erforderlichen Einrichtungen.

Wie die Fig. 1 zeigt, wird mit einem Sperrfilter SpF das Starkstromnetz StN von dem Bus B getrennt, der das für die Informationsübertragung verwendete Teilnetz bildet. Hinter dem Sperrfilter SpF wird die Zentrale Z angeschaltet, welche mit den Sendeeinrichtungen versehen ist. An den Bus B sind Stationen S mit entsprechenden Empfangseinrichtungen angeschaltet. Außerdem können an dem Bus B Starkstromverbraucher, Steckdosen und dgl. angeschaltet sein. Die Randbedingungen auf dem Bus B sind eingangs ausführlich erläutert, sie dürfen die Informationsübertragung nicht beeinträchtigen oder verfälschen.

Wie die Fig. 2 zeigt, wird für die Informationsübertragung auf dem Bus B der Nutzfrequenzbereich NFB bis 10 kHz ausgenützt. Ein Nutzband NB mit einem Nutzsignal NS liegt mit einer Trägerfrequenz 4f_{T} bei 8,740 kHz im oberen Frequenzbereich des Nutzfrequenzbereiches NFB. Ein Referenzband RB mit einem Referenzsignal RS liegt mit einer Sinusträgerfrequenz f_{T} bei 2,185 kHz im unteren Frequenzbereich des Nutzfrequenzbereiches NFB. Die Trägerfrequenz 4f_{T} des Nutzsignals NS ist ein ganzzahliges Vielfaches der Sinusträgerfrequenz f_{T} des Referenzsignals Rₛ. Das Referenzsignal Rₛ mit der Sinusträgerfrequenz von 2,185 kHz liegt daher, wie gefordert, mindestens eine Größenordnung über der Netzfrequenz von 50 Hz. Der Pegel des Referenzsignals Rₛ kann höher gewählt werden als der Pegel des Nutzsignals Nₛ, um die eingangs gestellten Bedingungen für die Übertragung auf der Starkstromleitung StN einhalten zu können. Das Referenzband Rₛ ist sehr schmal und für das Nutzsignal NS kann durchaus eine Bandbreite von 1 kHz zur Verfügung gestellt werden.

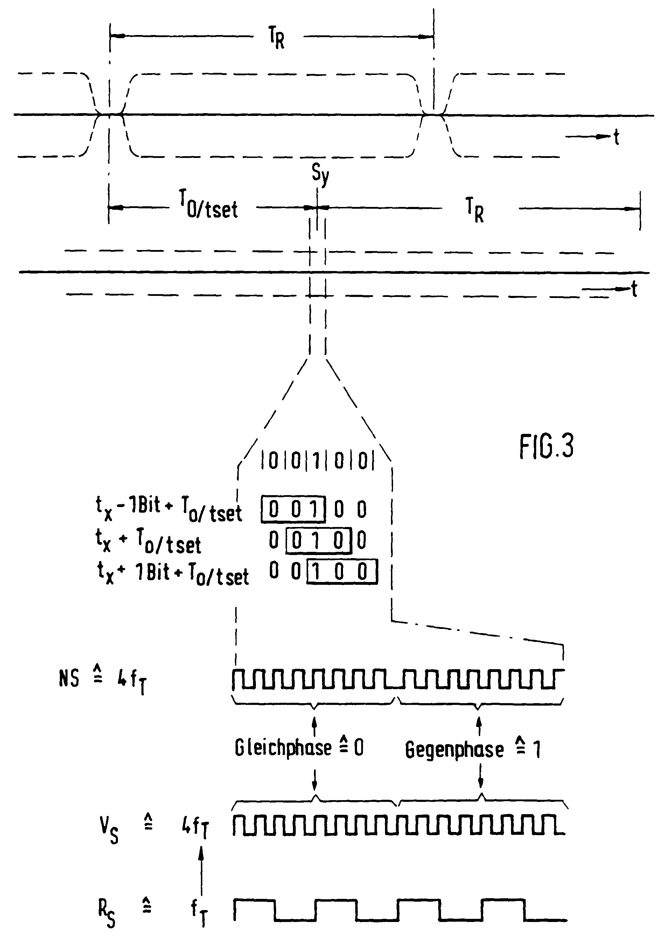

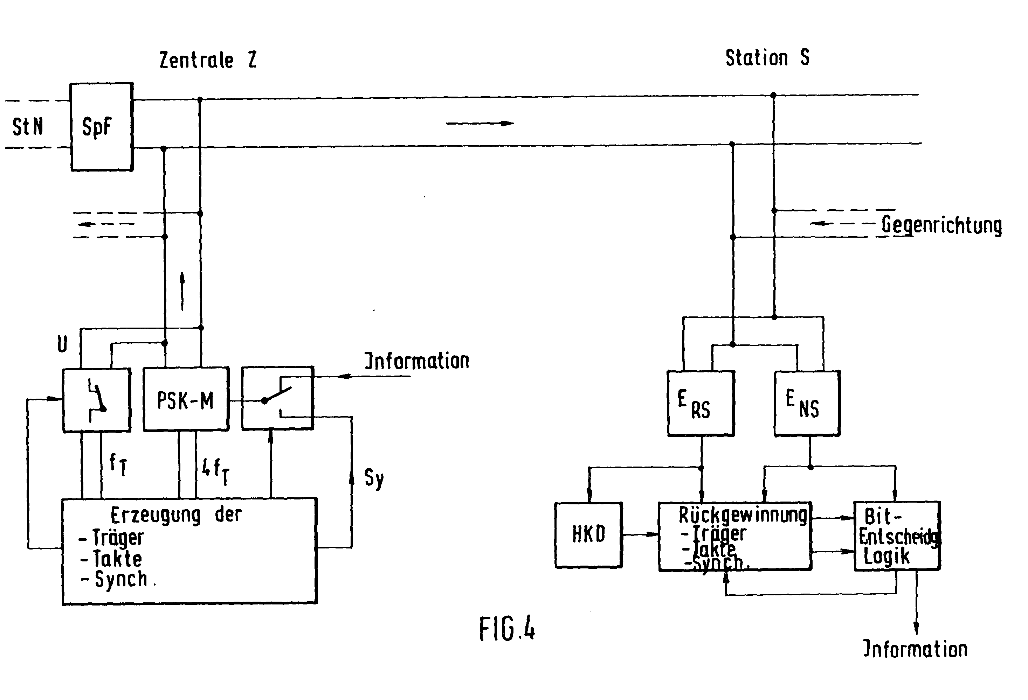

Anhand der Fig. 3 und 4 wird anhand eines Ausführungsbeispiels das Verfahren der Informationsübertragung näher erläutert. Im oberen Teil der Fig. 3 ist das Referenzsignal RS mit seiner Umhüllungskurve dargestellt. In einem vorgegebenen Zeitrahmen T_{R} wird das Referenzsignal unterbrochen. Anstelle der Unterbrechung kann das Referenzsignal RS auch anders periodisch verändert werden, um den Zeitrahmen T_{R} zu definieren. Nach einer vorgegebenen Zeitspanne T_{offset} wird im Nutzband NB ein Synchronisationscode Sy übertragen, an den sich die Informationen anschließen. Der Synchronisationscode Sy und die Informationen werden durch die Bit-Werte "0" und "1" gekennzeichnet. In der Zentrale Z ist eine Einrichtung zum Erzeugen der Träger für das Referenzsignal RS mit der Sinusträgerfrequenz f_{T} und das Nutzsignal NS unter der Trägerfrequenz 4f_{T}. Die Zeitspanne T_{offset} wird z.B. mit 32 Bitbreiten gewählt. Die Zeit tₓ zur Auswertung hängt vom Erkennen der Unterbrechung des Referenzsignals RS ab. Dazu wird ein Hüllkurvendetektor HKD verwendet. Der Zeitpunkt des Erkennens ist aber stark verjittert, z.B. ± 1 Bitbreite. Die Zeit bis zum Beginn des Synchronisationscodes Sy kann daher von tₓ-1 Bitbreite + T_{offset} bis tₓ+1 Bitbreite + T_{offset} schwanken. Man wählt demzufolge einen Synchronisationscode Sy der Form 00100, d.h. dem Bitwert "1" gehen soviele Bitwerte "0" voraus wie die Gesamtschwankung, d.h. 2 Bitbreite betragen kann. Dem Bitwert "1" folgen ebensoviele Bitwerte "0". Wie in Fig. 3 gezeigt ist, wird zur Auswertung des Bitwertes "1" des Synchronisationscodes Sy ein Zeitfenster mit der 3-fachen Bitbreite gewählt, so daß in dem möglichen Schwankungsbereich von ± 1 Bitbreite der Bitwert "1" sicher erfaßt wird.

Wie Fig. 4 zeigt, wird von der Steuerung der Zentrale, die die Trägerfrequenzen, die Zeittakte und den Synchronisationscode erzeugt, der der Unterbrecher U gesteuert, der die Übertragung der Sinusträgerfrequenz f_{T} des Referenzsignals RS auf die Starkstromleitung StN hinter dem Sperrfilter SpF unterbindet. Das Nutzsignal NS mit der Trägerfrequenz 4f_{T} wird über den PSK-Modulator in der Phase verändert und zwar in Abhängigkeit von den Bitwerten "0" und "1" der zu übertragenden Information oder des Synchronisationscodes Sy. In der Station S sind an die Starkstromleitung ein Empfänger E_{RS} für das Referenzsignal RS und ein Empfänger E_{NS} für das Nutzsignal NS angeschaltet. Aus dem empfangenen Referenzsignal RS wird dabei nach der Übersteuerung der Takt mit einer Frequenz f_{T} gewonnen. Aus diesem Takt kann das Vergleichssignal VS abgeleitet werden, das mit der Frequenz 4.f_{T} der Trägerfrequenz 4.f_{T} des Nutzsignals NS entspricht und in der Station S zum Phasenvergleich mit dem Nutzsignal NS zur Verfügung steht.

Die Bitwerte "0" und "1" erstrecken sich jeweils über eine vorgegebene Anzahl von Halbwellen des Nutzsignals NS und damit des Vergleichssignals VS. Befinden sich das Nutzsignal NS mit dem Vergleichssignal VS in Gleichphase, dann bedeutet dies den Bitwert "0", während der Bitwert "1" durch die Gegenphase von Nutzsignal NS und Vergleichssignal VS definiert ist.

Bei dem Ausführungsbeispiel nach Fig. 3 belegt eine Bitbreite jeweils 16 Halbwellen des Nutzsignals NS und die Zeitspanne T_{offset} ist mit 32 Bitbreiten gewählt. Der Zeitrahmen T_{R} kann beliebig gewählt werden und auch die Informationen können erst nach mehrmaligem richtigem Empfang ausgewertet und weiterbearbeitet werden.

Um eine möglichst sichere Übertragung zu bekommen, werden bei jedem Bitwert der Vergleich des Nutzsignals NS mit dem Referenzsignal RS in allen 16 Halbwellen durchgeführt und die Nichtübereinstimmungen bzw. Übereinstimmungen abgezählt. Die Zuordnung des Binärwertes "0" bzw. "1" erfolgt dadurch, mehr als die Hälfte der Vergleiche Nichtübereinstimmung bzw. Übereinstimmung ergeben haben. Dazu wird eine einfache digitale "Integrate and Dump"-Schaltung verwendet. Dies ergibt eine störsichere Auswertung der übertragenen Informationen, einschließlich des Synchronisationscodes Sy.

## Patentansprüche

1. Verfahren zum Übertragen von Informationen über eine Starkstromleitung, wobei die Informationen als Nutzsignal in einem Nutzband eines Nutzfrequenzbereiches übertragen werden und die Mittenfrequenz des Nutzbandes um mindestens eine Größenordnung höher ist als die Frequenz der auf der Starkstromleitung anstehenden, niederfrequenten Wechselspannung, die von der Netzfrequenz gebildet ist,
dadurch gekennzeichnet,
daß außerhalb des Nutzbandes (NB) im Nutzfrequenzbereich (NFB) oberhalb der Netzfrequenz in einem schmalen Referenzband (RB) ein separates Referenzsignal (RS) übertragen wird, und
daß aus dem Referenzsignal (RS) ein Signal zur Auswertung und Verarbeitung des Nutzsignals (NS) im Nutzband (NB) abgeleitet wird.

2. Verfahren nach Anspruch 1,
dadurch gekennzeichnet,
daß das Referenzband (RB) in einen Frequenzbereich des Nutzfrequenzbereiches (NFB) gelegt wird, der durch das Nutzband (NB) nicht belegt wird.

3. Verfahren nach Anspruch 1 oder 2,
dadurch gekennzeichnet,
daß das Referenzsignal (RS) als reine Sinusträgerfrequenz (f_{T}) übertragen wird.

4. Verfahren nach Anspruch 3,
dadurch gekennzeichnet,
daß das Referenzsignal (RS) in regelmäßigen Zeitabständen verändert, z.B. unterbrochen oder umgetastet wird, um einen Zeitrahmen (T_{R}) für eine Synchronisation zu erhalten.

5. Verfahren nach einem der Ansprüche 1 bis 4,
dadurch gekennzeichnet,
daß aus dem Zusammenwirken von Nutzsignal (NS) und Referenzsignal (RS) ein genauer Zeitpunkt für die Auswertung und Verarbeitung des Nutzsignals (NS) abgeleitet wird.

6. Verfahren nach einem der Ansprüche 1 bis 5,
dadurch gekennzeichnet,
daß der Nutzfrequenzbereich (NFB) unterhalb von 10 kHz gewählt wird und
daß das Nutzband (NB) in den oberen Frequenzbereich des Nutzfrequenzbereiches (NFB) und das Referenzband (RB) in den unteren Frequenzbereich des Nutzfrequenzbereiches (NFB) gelegt wird.

7. Verfahren nach einem der Ansprüche 1 bis 6,
dadurch gekennzeichnet,
daß das Referenzsignal (RS) mit höherem Pegel als das Nutzsignal (NS) übertragen wird.

8. Verfahren nach einem der Ansprüche 1 bis 7,
dadurch gekennzeichnet,
daß das Nutzsignal (NS) mit einer Trägerfrequenz (4f_{T}) übertragen wird, die ein ganzzahliges Vielfaches der Sinusträgerfrequenz (f_{T}) des Referenzsignals (RS) ist und
daß die Informationen im Nutzband (NS) durch Phasenumtastung (PSK) mit Synchrondemodulation gebildet werden, wobei empfangsseitig Gleichphase und Gegenphase mit einer aus dem Referenzsignal (RS) abgeleiteten, mit der Trägerfrequenz (4f_{T}) des Nutzsignals (NS) frequenzgleichen Vergleichssignals (Vₛ) die beiden binären Informationswerte "0" und "1" bilden.

9. Verfahren nach einem der Ansprüche 4 bis 8,
dadurch gekennzeichnet,
daß die Unterbrechung des Referenzsignals (RS) mittels eines Hüllkurvendetektors erfaßt wird und
daß nach einer vorgegebenen Zeitspanne (T_{offset}) im Nutzsignal (NS) in gleichmäßigen, dem Zeitrahmen (T_{R}) entsprechenden Abständen ein Synchronisationscode (S_{y}) übertragen wird.

10. Verfahren nach Anspruch 9,
dadurch gekennzeichnet,
daß bei einer Erkennung der Unterbrechung des Referenzsignals (RS) mit einer Toleranz von ± n Bitbreiten ein Synchronisationscode (S_{y}) verwendet wird, der aus einem "1"-Bit besteht, dem n x."0"-Bits vorausgeschickt und nachgesendet werden, und
daß ein Zeitfenster mit (n+1) Bits zur Auswertung des "1"-Bits und damit des Synchronisationscodes (S_{y}) verwendet wird.

11. Verfahren nach Anspruch 9 oder 10,
dadurch gekennzeichnet,
daß der Bit-Wert "0" und der Bit-Wert "1" im Synchronisationscode (S_{y}) und in der übertragenen Information mit einer vorgegebenen Anzahl (z.B. 16) von Halbwellen der Trägerfrequenz (4_{ft}) des Nutzsignals (NS) übertragen werden,
daß empfangsseitig die Anzahl der mit der aus der Sinusträgerfrequenz (f_{T}) des Referenzsignals (RS) abgeleiteten Vergleichssignals (Vₛ) gleichphasigen und gegenphasigen Halbwellen des Nutzsignals (NS) abgezählt werden und
daß bei der Auswertung des Nutzsignals (NS) für die Bit-Werte "0" und "1" mehr als die Hälfte der vorgegebenen Halbwellen (z.B. 9) gleichphasig bzw. gegenphasig festgestellt werden müssen.

## Claims

1. Method of transmitting data via a heavy current line, wherein the data are transmitted as a useful signal in a useful band of a useful frequency range, and the centre frequency of the useful band is at least one order of magnitude higher than the frequency of the low-frequency alternating-current voltage, which occurs on the heavy current line and is formed by the mains frequency, characterised in that a separate reference signal (RS) is transmitted in a narrow reference band (RB) outside the useful band (NB) in the useful frequency range (NFB) above the mains frequency, and in that a signal for evaluating and processing the useful signal (NS) in the useful band (NB) is derived from the reference signal (RS).

2. Method according to claim 1, characterised in that the reference band (RB) is placed in a frequency range of the useful frequency range (NFB) which is not covered by the useful band (NB).

3. Method according to claim 1 or 2, characterised in that the reference signal (RS) is transmitted as pure sinusoidal carrier frequency (f_{T}).

4. Method according to claim 3, characterised in that the reference signal (RS) is changed at regular intervals, e.g. interrupted or shifted, in order to obtain a time structure (T_{R}) for a synchronisation.

5. Method according to one of claims 1 to 4, characterised in that an accurate time for the evaluation and processing of the useful signal (NS) is derived from the co-operation between the useful signal (NS) and reference signal (RS).

6. Method according to one of claims 1 to 5, characterised in that the useful frequency range (NFB) is selected to be below 10 kHz, and in that the useful band (NB) is placed in the upper frequency range of the useful frequency range (NFB), and the reference band (RB) is placed in the lower frequency range of the useful frequency range (NFB).

7. Method according to one of claims 1 to 6, characterised in that the reference signal (RS) is transmitted at a higher level than the useful signal (NS).

8. Method according to one of claims 1 to 7, characterised in that the useful signal (NS) is transmitted with a carrier frequency (4f_{T}) which is an integer multiple of the sinusoidal carrier frequency (f_{T}) of the reference signal (RS), and in that the data in the useful band (NB) are formed by phase-shift keying (PSK) with synchronous demodulation, the identical phase and counter-phase at the receiving end forming the two binary data values "0" and "1" with a comparison signal (v_{S}), which is derived from the reference signal (RS) and has the same frequency as the carrier frequency (4f_{T}) of the useful signal (NS).

9. Method according to one of claims 4 to 8, characterised in that the interruption of the reference signal (RS) is detected by means of an envelope curve detector, and in that a synchronisation code (S_{y}) is transmitted after a prescribed time interval (T_{offset}) in the useful signal (NS) at uniform intervals corresponding to the time structure (T_{R}).

10. Method according to claim 9, characterised in that a synchronisation code (S_{y}) is used for detecting the interruption of the reference signal (RS) having a tolerance of ± n bit widths, said code comprising a "1" bit, to which n x "0" bits are sent in advance and forwarded, and in that a time window with (n + 1) bits is used for evaluating the "1" bits and hence the synchronisation code (S_{y}) .

11. Method according to claim 9 or 10, characterised in that the bit value "0" and the bit value "1" in the synchronisation code (S_{y}) and in the transmitted data are transmitted with a prescribed number of half-waves (e.g. 16) of the carrier frequency (4f_{T}) of the useful signal (NS), in that the number of the half-waves of the useful signal (NS) are counted at the receiving end, said half-waves having identical phases with or counter-phases to the comparative signal (v_{S}) derived from the sinusoidal carrier frequency (f_{T}) of the reference signal (RS), and in that more than half the prescribed half-waves (e.g. 9) have to be ascertained to be identical-phased or counter-phased when evaluating the useful signal (NS) for the bit values "0" and "1".

## Revendications

1. Procédé pour transmettre des informations par l'intermédiaire d'une ligne à courant fort, dans lequel les informations sont présentes sous forme de signal utile dans une bande utile d'une gamme des fréquences utiles et dans lequel la fréquence médiane de la bande utile est supérieure d'au moins un ordre de grandeur à la fréquence du courant alternatif basse fréquence provenant du secteur et transmis par la ligne à courant fort,
caractérisé
en ce qu'à l'extérieur de la bande utile (NB), dans la gamme des fréquences utiles (NFB) et au-dessus de la fréquence du secteur est, dans une bande de référence étroite (RB), transmis un signal de référence séparé (RS), et
en ce que du signal de référence (RS) est dérivé un signal pour l'analyse et le traitement du signal utile (NS) dans la bande utile (NB).

2. Procédé suivant la revendication 1,
caractérisé
en ce que la bande de référence (RB) est placée dans une gamme de fréquences de la gamme des fréquences utiles (NFB), qui n'est pas occupée par la bande utile (NB).

3. Procédé suivant la revendication 1 ou la revendfcation 2,
caractérisé
en ce que le signal de référence (RS) est transmis sous forme de fréquence porteuse sinusoïdale (f_{T}) pure.

4. Procédé suivant la revendication 3,
caractérisé
en ce que le signal de référence (RS) est à intervalles de temps réguliers modifié, par exemple interrompu ou modifié d'une autre manière, pour obtenir un cadre de temps (T_{R}) pour une synchronisation.

5. Procédé suivant l'une quelconque des revendications de 1 à 4,
caractérisé
en ce que de la coopération entre le signal utile (NS) et le signal de référence (RS), il est dérivé un instant exact pour l'analyse et le traitement du signal utile (NS).

6. Procédé suivant l'une quelconque des revendications de 1 à 5
caractérisé
en ce que la gamme des fréquences utiles (NFB) choisie est inférieure à 10 kHz et
en ce que la bande utile (NB) est placée dans la gamme de fréquences supérieure de la gamme des fréquences utiles (NFB) et en ce que la bande de référence (RB) est placée dans la gamme de fréquences inférieure de la gamme des fréquences utiles (NFB).

7. Procédé suivant l'une quelconque des revendications de 1 à 6
caractérisé
en ce que le signal de référence (RS) est transmis à un niveau plus élevé que le signal utile (NS).

8. Procédé suivant l'une quelconque des revendications de 1 à 7
caractérisé
en ce que le signal utile (NS) est transmis avec une fréquence porteuse (4f_{T}) qui est un multiple entier de la fréquence sinusoïdale porteuse (f_{T}) du signal de référence (RS) et
en ce que dans la bande utile (NS), les informations sont formées par modification de phase (PSK) avec démodulation synchrone, où côté réception la phase identique et la phase opposée constituent, avec un signal de comparaison (V_{S}) de même fréquence que la fréquence porteuse (4f_{T}) du signal utile (NS) et dérivé du signal de référence (RS), les deux valeurs d'information binaires "0" et "1".

9. Procédé suivant l'une quelconque des revendications de 1 à 8
caractérisé
en ce que l'interruption du signal de référence (RS) est détectée au moyen d'un détecteur de courbes enveloppes, et
en ce qu'après un intervalle de temps de consigne (T_{offset}), un code de synchronisation est, à intervalles de temps réguliers correspondant au cadre de temps (T_{R}), transmis dans le signal utile (NS).

10. Procédé suivant la revendication, 9,
caractérisé
en ce que lors d'une détection de l'interruption du signal de référence (RS) avec une tolérance de ± n largeurs de bit, il est utilisé un code de synchronisation (S_{y}) qui est constitué par un bit "1", qui est précédé ou suivi de n x bits "0", et
en ce qu'une fenêtre de temps de (n+1) bits est utilisée pour l'analyse du bit "1" et dès lors du code de synchronisation.

11. Procédé suivant la revendication 9 ou la revendication 10,
caractérisé
en ce que la valeur de bit "0" et la valeur de bit "1" dans le code de synchronisation (S_{y}) et dans l'information transmise sont transmises avec un nombre de consigne (par exemple 16) de demi-ondes de la fréquence porteuse (4f_{T}) du signal utile (NS),
en ce que côté réception il est dénombré le nombre de demi-ondes de même phase ou de phase opposée du signal utile (NS) du signal de comparaison (V_{S}) dérivé de la fréquence sinusoïdale porteuse (f) du signal de référence (RS) et
en ce que lors de l'analyse du signal utile (NS) il est nécessaire, pour les valeurs de bit "0" et "1", de relever plus de la moitié (par exemple 9) des demi-ondes de consigne de même phase ou de phase opposée.
